# EUROPÄISCHE PATENTSCHRIFT

(11) **EP 0 665 095 B1**
(45) Veröffentlichungstag und Bekanntmachung des Hinweises auf die Patenterteilung: **08.04.1998**
(21) Anmeldenummer: 95100648.5
(22) Anmeldetag: 19.01.1995
(51) Int. Cl.: B29C 47/76

(54) **Verfahren zur Entwässerung von wasserfeuchtem Pfropfkautschuk**
Process for dehydrating water moistened graftrubber
Procédé de déshydratation de caoutchouc greffé humide en eau

(30) Priorität: 27.01.1994 DE 4402394
(43) Veröffentlichungstag der Anmeldung: 02.08.1995
(73) Patentinhaber: BASF AKTIENGESELLSCHAFT, 67056 Ludwigshafen (DE)
(72) Erfinder: Güntherberg, Norbert, Dr., D-67346 Speyer (DE); Hofmann, Jürgen, D-67069 Ludwigshafen (DE); Ohlig, Hilmar, D-67657 Kaiserslautern (DE); Mailahn, Elmar, D-67547 Worms (DE); Seitz, Friedrich, Dr., D-67159 Friedelsheim (DE); Gausepohl, Hermann, Dr., D-67112 Mutterstadt (DE); Koch, Jürgen, Dr., D-67141 Neuhofen (DE); Deckers, Andreas, Dr., D-55234 Flomborn (DE)

(56) Entgegenhaltungen:
- DE-A- 1 579 106
- FR-A- 576 156
- US-A- 3 672 641
- US-A- 4 110 843
- US-A- 4 446 094
- PATENT ABSTRACTS OF JAPAN vol. 13, no. 500 (M-891)(3848) 10. November 1989 & JP-A-01 202 406 (TOSHIBA)
- PATENT ABSTRACTS OF JAPAN vol. 9, no. 87 (M-372)(1810) 17. April 1985 & JP-A-59 214 631 (NIPPON)

## Beschreibung

Die Erfindung betrifft ein Verfahren zur weitgehend mechanischen Entwässerung von wasserfeuchtem Kautschuk zu einem Kompaktat mit mindestens 50 % Kautschukgehalt.

Kautschuke, vor allem z.B.Pfropfkautschuke, wie sie für die Schlagzähmodifizierung von Kunststoffen benötigt werden, werden gewöhnlich durch Emulsionspolymerisation hergestellt; der erhaltene Latex wird durch Elektrolytzugabe koaguliert, mit Wasser gewaschen, zentrifugiert und weiter entwässert. Solche Pfropfkautschuke sind z.B. Butadien-g-SAN oder Butylacrylat-g-SAN oder es sind mehrstufig aufgebaute Kautschuke auf der Grundlage der Monomeren Butadien, Styrol, Butylacrylat, Methylmethacrylat oder Acrylnitril. Auch Kautschuke für andere Einsatzzwecke werden oft auf diesem Wege erhalten.

Meist entwässert man durch Trocknen des noch bis zu 50 % Wasser enthaltenden schleuderfeuchten Materials, das dann bestimmungsgemäß in eine Thermoplastschmelze eingearbeitet und so zum Endprodukt verarbeitet wird. Der Kautschuk wird in diesem Fall als Pulver gehandhabt, das wegen des Feinstaubanteils zur Selbstentzündung neigt.

Nach einem in DE-A-20 37 784 beschriebenen Vorschlag kann man schleuderfeuchten Pfropfkautschuk in eine SAN-Schmelze unter Verdampfen des Wassers eintragen und einen bis zu 60 % Pfropfkautschuk enthaltenden Thermoplasten gewinnen. Dieses Verfahren erfordert einen relativ hohen Aufwand an elektrischer Energie, wobei Kautschukpartikel und Hilfsmittelreste mit dem verdampfenden Wasser mitgerissen werden und als Sondermüll entsorgt werden müssen. Das dampfförmig abgezogene, durch Kautschukbestandteile verunreinigte Wasser ist zusammen mit dem zur Kondensation nötigen Kühlwasser als behandlungsbedürftiges Abwasser zu betrachten.

Außerdem können ggf. in den Extrudern auftretende Hilfsmittelablagerungen das Produkt verunreinigen.

Die Erfindung hat sich die Aufgabe gestellt, ein Verfahren zu schaffen, das die genannten Nachteile weitgehend vermeidet. Hierzu ist folgendes vorauszuschicken:

Aus der allgemeinen Kautschuktechnologie ist bekannt, feuchten bzw. mehr oder weniger teilentwässerten Kautschuk aus sog. Slurries dadurch zu gewinnen, daß das Wasser mechanisch in Pressen, auch Schraubenpressen, abgepreßt wird. Hierzu werden häufig Apparate mit Seihergehäusen eingesetzt, durch die das Wasser wie durch ein Sieb abfließen kann. Diese Seihergehäuse neigen aber zu Verstopfungen. Der auf diesem Weg gewonnene Kautschuk, der noch eine gewisse Restfeuchte enthält, wird dann zu Ballen gepreßt oder granuliert.

Auch die Gewinnung von Thermoplasten aus wäßriger Umgebung hat zu ähnlichen Problemlösungen geführt.

So beschreibt die japanische Patentveröffentlichung 86/053 362 ein Verfahren zur Gewinnung von Polymeren aus nicht trocknen Polymerisaten oder Schlämmen (Slurries). Als Beispiel dient die Entwässerung einer Poly-SAN-Slurry mit ca. 40 % Feststoffgehalt und einer Teilchengröße von 0,3 mm auf einem Zweischneckenextruder, der mit 2 Seihergehäusen und 3 Entgasungsöffnungen versehen ist. Die Entgasung geschieht unter vermindertem Druck.

Die japanische Patentveröffentlichung 2 286 208 beschreibt ein Verfahren, in dem ein Zweischneckenextruder zur Entwässerung von thermoplastischen Formmassen genutzt wird. Auch hier sind Seihergehäuse für die Flüssigentwässerung und mehrere Entgasungsöffnungen für das verdampfende Wasser vorgesehen.

Die japanische Patentveröffentlichung 84/027 776 beschreibt ein Verfahren zum Entwässern und Plastifizieren von ABS-Polymeren in einer Schneckenmaschine, wobei das Wasser entgegen der Förderrichtung entfernt wird und sich eine zweistufige Entgasung anschließt oder - in einer anderen Ausführungsform - mit einer speziellen, mit mehrfachen Einschnürungen versehenen Schnecke. Derartige Schneckenkonstruktionen sind nur als teure Spezialanfertigungen erhältlich.

Die europäische Patentveröffentlichung 0 534 235 beschreibt die Herstellung von schlagzäh modifizierten Thermoplasten durch Einarbeitung von mechanisch teiweise entwässertem Kautschuk in einen Thermoplasten oberhalb des Erweichungspunktes des Thermoplasten, wobei der Kautschuk vor der Einarbeitung in einem Extruder teilweise entwässert und das verbleibende Restwasser während der Einarbeitung durch Entgasungsvorrichtungen entfernt wird, die vor und nach der Einmischstelle angeordnet sein können.

Dieses Verfahren hat ebenfalls den Nachteil, daß noch eine große Menge Wasser verdampft werden muß, wobei überdies zwei Maschinen, nämlich ein Hauptextruder und ein Seitenextruder, benötigt und ebenfalls nur eingeschränkt verwendbare Konzentrate erhalten werden.

Die gestellte Aufgabe wird gemäß Anspruch 1 gelöst.

Es wurde gefunden, daß die im wesentlichen mechanische Entwässerung von wasserfeuchtem Kautschuk auf einer einzigen, extrudierenden Zweiwellenschneckenknetmaschine mit handelsüblichen Bauteilen zu einer verdichteten, außerlich trockenen Kautschukmasse (Kompaktat) gelingt, wenn man eine Maschine mit gleichsinnig rotierenden, zwei- oder vorzugsweise dreigängigen Schnecken verwendet, der man den gefällten, wasserfeuchten Kautschuk im Dosierabschnitt zuführt, wobei der Extruder in Förderrichtung nacheinander mindestens zwei Stauzonen und zwei zugehörige Entwässerungsöffnungen aufweist, die bei Bedarf mit je einer Rückhalteschnecke versehen sind, sowie anschließend mindestens eine Knetzone und wiederum anschließend mindestens eine Entgasungszone sowie schließlich eine Austragszone, deren Öffnung bedarfsweise durch eine Düsenleiste abgeschlossen ist.

Die Anordnung kann unter Zuhilfenahme von marktüblichen Extruderbauteilen aufgebaut werden, die in Form von unterschiedlich geschnittenen Schnecken- und zugehörigen Gehäuseabschnitten ("Schüssen") verfügbar sind und bei Bedarf eine genaue Anpassung an das spezielle Entwässerungsproblem ermöglichen.

Man erhält auf diese Weise aus verschiedenen Typen von wasserfeuchtem Kautschuk eine weitgehend mechanisch entwässerte Masse, die ohne weiteren Zusatz etwa von fließverbessernden Mitteln oder Thermoplasten plastifiziert und in ein zylinder- oder tablettenförmiges Kompaktat (Granulat) überführt wird, das staubfrei zu handhaben ist.

Das erfindungsgemäße Verfahren eignet sich zur Herstellung von Kautschukgranulaten für unterschiedliche Verwendungszwecke; besonders ist sein Einsatz gedacht für die Herstellung von Kautschuk-Rohstoffen, wie sie zur Schlagzähmodifizierung von sprödharten Kunststoffen verwendet werden, beispielsweise Kautschuken auf der Grundlage von Butadien-, Butadien/Acrylnitril- oder Butadien/Styrol-Copolymeren oder pfropfcopolymeren und Kautschuken auf der Grundlage von kautschukelastische Polymere bildenden Acrylsäure-Estern wie Ethylacrylat, Butylacrylat oder Ethylhexylacrylat. Die geeigneten Monomeren können auch Substitutionsprodukte der vorstehenden Monomeren sein. Allgemein eignen sich Polymere aus ggf.substituierten 1,3-Dienen oder n-Alkylacrylaten und deren Copolymere oder Pfropfcopolymere mit vinylaromatischen Monomeren wie Styrol oder anderen, harte Polymere bildenden Monomeren wie Acrylnitril oder Methylmethacrylat.

### Praktische Beschreibung des Verfahrens (vgl. hierzu Figur)

Verwendet wird eine jeweils dreigängige Zweischneckenmaschine (Typ ZSK 53 des Herstellers Werner & Pfleiderer), die aus folgenden Gehäuseabschnitten besteht:
- wahlweise ein mit einer obenliegenden Öffnung versehener, unbeheizter Gehäuseabschnitt (1), um eingeschlossene Luft zu entfernen;
- Abschnitt (2), Dosieröffnung, unbeheizt, versehen mit Einschneckenbestückung (ESB45)-Dosiervorrichtung;
- Abschnitt (3) unbeheizt, mit obenliegender Entwässerungsöffnung, versehen mit Rückhalteschnecke;
- Abschnitt (4) unbeheizt, ohne Öffnung;
- Abschnitt (5) unbeheizt, mit obenliegender Entwässerungsöffnung, versehen mit Rückhalteschnecke;
- Abschnitt (6) geschlossen;
- Entgasungsabschnitt (7, beheizt) für atmosphärische Entgasung, Aufweitung des Schneckengehäuses z.B. von 53 auf 57 mm
- fördernder Abschnitt (8), geschlossen, beheizt;
- Düsenleiste (9) zur Formung des auszutragenden Guts.

Den vorstehend beschriebenen Gehäuseabschnitten entsprechen Schneckenabschnitte (vgl. Figur), die wie folgt zu bezeichnen sind:
Einzugs- und Förderbereich (10),
erste Abquetschzone (11),
zweite Abquetschzone (12),
Knetzone (13),
Entgasungs- und Austragsbereich (14).

### Beispiel

Der feuchte Kautschuk wird in die Dosieröffnung einer gleichsinnig laufenden jeweils dreigängigen, in der Eingangszone (Bereich 10; Fig.) rechtsgängigen Zweischneckenmaschine gefördert. Durch eine geeignete Schneckengeometrie oder eine Öffnung in Förderrichtung stromauf kann evt. eingeschlossene Luft entweichen. Der Kautschuk wird stromab in Förderrichtung gegen eine Stauzone, in diesem Fall ein doppeltes Linksgewinde gefördert. Hierdurch wird Druck aufgebaut, der zum Auspressen des im Kautschuk eingeschlossenen Wassers führt (Bereich 11). Das Wasser kann durch die Entwässerungsöffnung im Gehäuse bei atmosphärischem Druck abfließen. Hierbei werden, z.B. 35 % bis 80 % des anhaftenden Wassers entfernt. Das Wasser hat beim Verlassen des Extruders eine Temperatur von etwa 25°C bis 90°C.

Der teilentwässerte Kautschuk wird über die als Hindernis wirkende Stauzone (11) hinweg gegen eine zweite Stauzone (12) gefördert, an der eine weitere Entwässerung um wiederum bis zu 25 % des gesamten Wassers stattfindet. Die Temperatur steigt durch die Reibung auf etwa 100°C. Der teilentwässerte Kautschuk ist hier i.a. noch pulverförmig. An die zweite Stauzone schließt eine Knetzone (12) an. Hier wird die für die Verdampfung des restlichen Wassers und die Plastifizierung notwendige Energie eingebracht. Es schließt sich eine atmosphärische Entgasungsstufe an, in der noch Restmengen an Wasser, diesmal dampfförmig entweicht (14). Die geringe Wassermenge und die relativ große Entgasungsöffnung (7) stellen sicher, daß keine Partikel mitgerissen werden oder daß mitgerissene Partikel sofort wieder zurückfallen. Der plastifizierte und kompaktierte Kautschuk wird durch eine Düsenplatte (9) ausgetragen und hat hier eine Temperatur von 130 bis 180°C. Die Restfeuchte beträgt 7 bis 0,5 %.

Das erfindungsgemäße Verfahren wurde an verschiedenen Materialien untersucht.

### A-1

Polybutadienkautschuk, gepfropft mit SAN, nach den Angaben der DE-A-24 27 960 oder EP-A-258 741 (dort: Komponente A), gefällt durch Elektrolytzugabe und vorentwässert auf eine Restfeuchte von 27 bis 33 Gew.-% Wasser.

### A-2

Polybutylacrylat-Kautschuk, gepfropft mit SAN, nach den Angaben der DE-A-12 60 135 (Komponente A), gefällt durch Elektrolytzugabe und vorentwässert auf eine Restfeuchte von 27 bis 33 % Wasser.

### A-3

Polybutylacrylat-Kautschuk, gepfropft mit SAN, nach den Angaben der DE-A-31 49 358 (Komponente A + B), gefällt durch Elektrolytzugabe und vorentwässert auf eine Restfeuchte von 30 bis 38 % Wasser.

Die Pfropfkautschukmassen wurden dem oben beschriebenen Extruder zugeführt. Gemessen wurden der Wasseraustrag und der Kautschukaustrag an der ersten und zweiten Abquetschzone, die Restfeuchte des Granulats, die Temperatur des ausgetragenen Kompaktats und des abgequetschten Wassers. Berechnet wurde die verdampfte Wassermenge. Alle Mengenbestimmungen sind gravimetrisch.

| Beispiel | 1 | 2 | 3 |
|---|---|---|---|
| Kautschukkomponente | A-1 | A-2 | A-3 |
| Durchsatz feucht (kg/h) | 100 | 110 | 110 |
| Drehzahl/UPM | 280 | 250 | 200 |
| Anfangsfeuchte (Gew.-%) | 29,7 | 29,9 | 34,3 |

| Austrag Entwässerung 1 | | | |
|---|---|---|---|
| Wasser (Gew.-%) | 12,9 | 16,9 | 22,9 |
| Temperatur (°C) | 28 | 26 | 39,4 |
| Kautschuk (Gew.-%) | 3,3 | 4,6 | 4,4 |

| Austrag Entwässerung 2 | | | |
|---|---|---|---|
| Wasser (Gew.-%) | 6,7 | 3,8 | 0,3 |
| Temperatur (°C) | 87 | 78 | 84 |
| Kautschuk (Gew.-%) | 0,3 | 0,1 | 0 |

| Entgasung | | | |
|---|---|---|---|
| Dampf (Gew.-%) | 7,7 | 7,9 | 8,6 |

| Strangfeuchte | | | |
|---|---|---|---|
| Wasser (Gew.-%) | 2,4 | 1,3 | 2,9 |

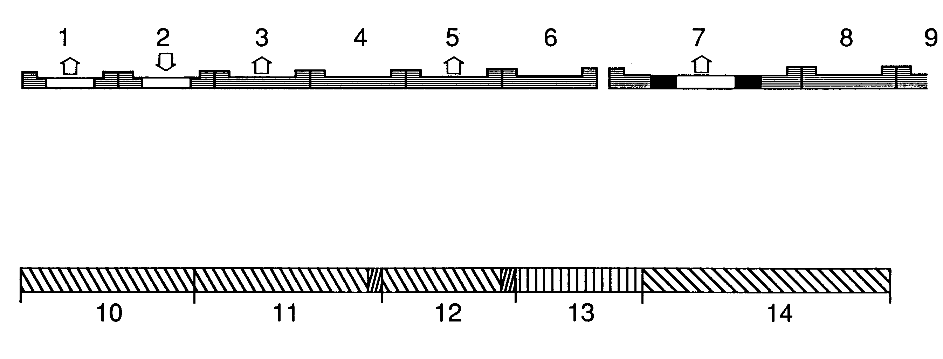

## Patentansprüche

1. Verfahren zur Gewinnung von im wesentlichen trockenen Massen durch mechanische Entwässerung von wasserfeuchtem, durch Emulsionspolymerisation und Fällung hergestelltem Kautschuk zu einem Kompaktat mit mindestens 50 % Kautschukgehalt auf einer Zweiwellenknetmaschine, dadurch gekennzeichnet, daß man den vorentwässerten Kautschuk dem Dosierabschnitt eines Zweischneckenextruders mit gleichsinnig rotierenden Schnecken zuführt, der in Förderrichtung nacheinander mindestens zwei Stauzonen und zwei zugehörige Entwässerungsöffnungen sowie mindestens eine Knetzone, eine Entgasungszone und schließlich eine Austragszone aufweist und daß man das abgeschiedene Wasser an den Entwässerungsöffnungen in flüssiger Form austrägt.

2. Verfahren nach Anspruch 1, dadurch gekennzeichnet, daß die Entwässerungsöffnungen mit jeweils einer Rückhalteschnecke versehen sind und die Austragszone durch eine Düsenleiste abgeschlossen ist.

3. Verfahren nach Anspruch 1, dadurch gekennzeichnet, daß ein Kautschuklatex auf der Grundlage eines Dien- oder Acrylesterpolymeren oder eines ihrer Pfropfpolymerisate entwässert wird.

## Claims

1. A process for obtaining essentially dry materials by mechanically dewatering water-moist rubber, prepared by emulsion polymerization and precipitation, to give a compact material having a rubber content of at least 50% in a twin-screw kneader, wherein the previously dewatered rubber is fed to the feed section of a twin-screw extruder which has screws rotating in the same direction and possesses, in succession in the conveying direction, at least two back-up zones and two associated dewatering orifices and at least one kneading zone, one devolatilization zone and finally one discharge zone, and the water separated off is discharged at the dewatering orifices in liquid form.

2. A process as claimed in claim 1, wherein the dewatering orifices are each provided with a retaining screw, and the discharge zone is closed by a die lip.

3. A process as claimed in claim 1, wherein a rubber latex based on a diene polymer or acrylate polymer or on one of their graft polymers is dewatered.

## Revendications

1. Procédé d'obtention de masses essentiellement sèches par déshydratation mécanique de caoutchouc humide en eau, préparé par polymérisation en émulsion et par précipitation, en un matériau compact avec une teneur en caoutchouc d'au moins 50 % dans un appareil de malaxage à deux cylindres, caractérisé en ce qu'on introduit le caoutchouc prédéshydraté à la section de dosage d'une extrudeuse à deux vis avec des vis tournant dans le même sens, qui présente, dans la direction de transport, successivement, au moins deux zones de retenue et deux ouvertures de déshydratation associées, de même qu'au moins une zone de malaxage, une zone de dégazage et finalement une zone d'évacuation et en ce qu'on évacue l'eau séparée aux ouvertures de déshydratation sous forme liquide.

2. Procédé selon la revendication 1, caractérisé en ce que les ouvertures de déshydratation sont munies respectivement d'une vis de retenue et en ce que la zone d'évacuation est fermée par une lèvre de filière.

3. Procédé selon la revendication 1, caractérisé en ce qu'on déshydrate un latex de caoutchouc à base d'un polymère diénique ou d'ester acrylique ou d'un de leurs polymères greffés.
